# EUROPEAN PATENT APPLICATION

(11) **EP 4 033 734 A2**
(43) Date of publication of application: **27.07.2022**
(21) Application number: 22175399.9
(22) Date of filing: 25.05.2022
(51) Int. Cl.: H04L 51/04, H04L 51/216, H04L 51/18, H04L 51/52

(54) **METHOD AND APPARATUS FOR MEASURING THE COMMUNICATION FREQUENCY BETWEEN USER ACCOUNTS**

(30) Priority: 30.06.2021 CN 202110738468
(71) Applicant: Beijing Baidu Netcom Science and Technology Co., Ltd., Beijing 100085 (CN)
(72) Inventor: CAO, Shijie, Beijing 100085 (CN); LI, Yanan, Beijing 100085 (CN); HE, Bolei, Beijing 100085 (CN); CHEN, Kunbin, Beijing 100085 (CN); HE, Wei, Beijing 100085 (CN); HE, Feng, Beijing 100085 (CN)
(74) Representative: Maiwald Patent- und Rechtsanwaltsgesellschaft mbH

(57) **Abstract**

A method and an apparatus for generating an account intimacy and a storage medium are provided, which relates to the fields of deep learning, cloud computing and big data. The method includes: obtaining a set of accounts in an instant messaging (IM) group; obtaining a communication frequency between accounts in the set of accounts within a preset time period; generating a communication network graph based on the communication frequency; obtaining an embedding vector of each account output by a graph model, in which the graph model is trained based on the communication network graph; and generating an intimacy between the accounts based on the embedding vectors. In this way, an account intimacy model is generated independently without binding with a downstream business, and the graph model can be effectively used to mine an association between accounts, so as to improve the intimacy generation accuracy.

## Description

### TECHNICAL FIELD

The disclosure relates to the technical field of artificial intelligence, in particular to the technical fields of deep learning, cloud computing and big data, and in particular, to a method for generating an account intimacy, an apparatus for generating an account intimacy, an electronic device and a storage medium.

### BACKGROUND

Currently, there are various relationships between two accounts in an instant messaging (IM) scenario, and the relationship between the two accounts may change greatly over time. For example, in an office IM scenario, the two accounts may establish a new relationship with change of work content. Account intimacy can effectively reflect a relationship between the two accounts (e.g., the account intimacy may refer to a correlation degree between the two accounts), and provide convenience for realization of businesses such as a friend recommendation in an IM application.

### SUMMARY

The disclosure provides a method for generating an account intimacy, an apparatus for generating an account intimacy, an electronic device and a storage medium.

According to a first aspect, the disclosure provides a method for generating an account intimacy which is performed by a terminal. The method includes: obtaining a set of accounts in an instant messaging (IM) group; obtaining a communication frequency between two accounts in the set of accounts within a preset time period; generating a communication network graph based on the communication frequency; obtaining an embedding vector of each account output by a graph model, in which the graph model is trained based on the communication network graph; and generating an intimacy between the two accounts based on the embedding vectors of the two accounts.

According to a second aspect, the disclosure provides an apparatus for generating an account intimacy. The apparatus includes: a first obtaining module, a second obtaining module, a constructing module, a training module and a generating module.

The first obtaining module is configured to obtain a set of accounts in an instant messaging (IM) group. The second obtaining module is configured to obtain a communication frequency between two accounts in the set of accounts within a preset time period. The constructing module is configured to generate a communication network graph based on the communication frequency. The training module is configured to obtain an embedding vector of each account output by a graph model, in which the graph model is trained based on the communication network graph. The generating module is configured to generate an intimacy between two accounts based on the embedding vectors of the two accounts.

According to a third aspect, embodiments of the disclosure provide a non-transitory computer readable storage medium storing computer instructions, in which the computer instructions are configured to cause the computer to perform the method according to the embodiments of the first aspect.

In the disclosure, the communication network graph generated according to the communication frequency between two accounts is used to train the graph model, an account intimacy model is generated independently without binding with a downstream business. At the same time, the intimacy of the account is modeled based on the graph neural network, and the graph model can be effectively used to mine an association between accounts, to capture local characteristics and global characteristics in the communication network graph, and to improve the intimacy generation accuracy of intimacy between the accounts.

It should be understood that the content described in this section is not intended to identify the key or important features of the embodiments of the disclosure, nor is it intended to limit the scope of the disclosure. Additional features of the disclosure will be easily understood through the following description.

### BRIEF DESCRIPTION OF THE DRAWINGS

The drawings are used to better understand the solution and do not constitute a limitation of the disclosure.
FIG. 1 is a flowchart of a method for generating an account intimacy according to Embodiment 1 of the disclosure.
FIG. 2 is a flowchart of a method for generating an account intimacy according to Embodiment 2 of the disclosure.
FIG. 3 is a flowchart of a method for generating an account intimacy according to Embodiment 3 of the disclosure.
FIG. 4 is a communication network diagram according to an embodiment of the disclosure.
FIG. 5 is a schematic diagram of a scenario of a method for generating an account intimacy according to an embodiment of the disclosure.
FIG. 6 is a block diagram of an apparatus for generating an account intimacy according to Embodiment 1 of the disclosure.
FIG. 7 is a block diagram of an apparatus for generating an account intimacy according to Embodiment 2 of the disclosure.
FIG. 8 is a block diagram of an electronic device used to implement the method for generating an account intimacy according to an embodiment of the disclosure.

### DETAILED DESCRIPTION

Embodiments of the disclosure are described below in combination with the accompanying drawings, which include various details of the embodiments of the disclosure to aid in understanding, and should be considered merely exemplary. For the sake of clarity and brevity, descriptions of well-known features and structures have been omitted from the following description.

Artificial Intelligence (AI) is a technical science that studies and develops theories, methods, technologies and application systems for simulating, extending and expanding human intelligence. Currently, the AI technology has the advantages of high automation degree, high accuracy and low cost, and thus has been widely used.

Deep Learning (DL) is a new research direction in the field of Machine Learning (ML), which learns inherent laws and representation levels of sample data. The information obtained during these learning processes is of great help in the interpretation of data such as texts, images and sounds. Its ultimate goal is to enable machines to have the ability to analyze and learn like humans, and to recognize data such as words, images and sounds. As far as the specific research content is concerned, it mainly includes neural network systems based on convolution operations, namely convolutional neural networks; auto-encoding neural networks based on multi-layer neurons; deep belief networks that are pre-trained in the form of multi-layer auto-encoding neural network, and then combined with discriminant information to further optimize neural network weights. Deep learning has achieved many results in search technology, data mining, machine learning, machine translation, natural language processing, multimedia learning, speech, recommendation and personalization technology, and other related fields. Deep learning enables machines to imitate human activities such as audio-visual and thinking, to solve many complex pattern recognition problems, which makes great progress in the AI-related technologies.

Cloud computing is a pay-per-use model that provides available, convenient and on-demand network access into a configurable shared pool of computing resources (in which the resources include network, server, storage, application software, services). These resources can be provided quickly with little administrative efforts or little interaction with service providers. Cloud computing is a product of the development and integration of conventional computers and network technologies such as distributed computing, parallel computing, utility computing, network storage, virtualization, load balancing, and hot backup redundancy. Cloud computing centralizes computing from the client terminal to the "cloud", and provides the computing as an application with users through the Internet. The computing is completed by multiple computers through technologies such as distributed computing. The user only needs to care about the function of the application, but not the implementation mode of the application. The implementation and maintenance of the application are completed by its provider, and the user selects the corresponding application according to his own needs.

Big data is a large and complex data set that is difficult to handle by existing database management tools and conventional methods in data processing application. The scope of big data technology includes collection, storage, search, sharing, transmission, analysis and visualization. The big data technology is a new generation of information technology and service format where a data collection characterized by large capacity, various types, fast access speed and high application value has gradually developed into collection, storage and correlation of data with a huge amount, scattered sources and various formats, so as to discover new knowledge, create new value, and enhance new capabilities. Big data must adopt a distributed architecture to perform distributed data mining on massive data. Therefore, big data must rely on distributed processing of cloud computing, distributed databases, cloud storage, and virtualization technologies to analyze and mine large-scale and highly complex data, so as to discover value and predict trends.

Since the generated account intimacy in the related art is not enough accurate, a method for generating an account intimacy, an apparatus for generating an account intimacy, an electronic device and a storage medium according to the embodiments of the disclosure are provided and described below with reference to the accompanying drawings.

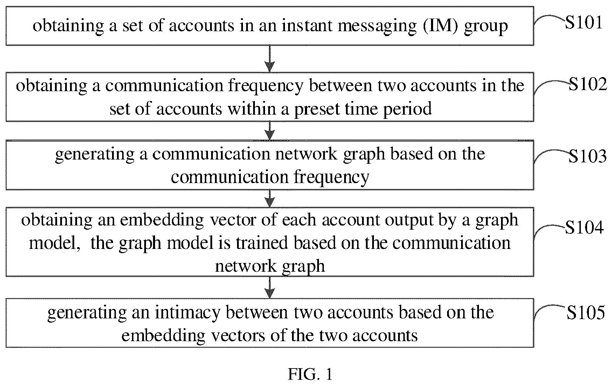

FIG. 1 is a flowchart of a method for generating an account intimacy according to Embodiment 1 of the disclosure.

As shown in FIG. 1, the method for generating an account intimacy according to the embodiments of the disclosure may specifically include the following steps.

In step S101, a set of accounts in an instant messaging (IM) group is obtained.

In detail, the execution body of the method for generating an account intimacy according to the embodiments of the disclosure may be the apparatus for generating an account intimacy according to the embodiments of the disclosure. The apparatus may be a hardware device with data information processing capability and/or necessary software to drive the hardware device to work. In an embodiment, the execution body may include workstations, servers, computers, account terminals and other devices. The account terminals include but is not limited to mobile phones, computers, intelligent voice interaction devices, intelligent home appliances, vehicle terminals, and the like.

IM is a real-time communication system that allows two or more people to use the network to communicate with each other by transmitting text messages, files, voices and videos in real time. The IM can be divided into an enterprise IM and a website IM according to the purpose of use. According to the loaded objects, the IM can be divided into a mobile IM and a PC IM. Mobile IM is represented by a SMS, a website IM, and a video IM.

In this embodiment of the disclosure, a method for generating an account intimacy is described by taking real-time communication between accounts in an IM scenario as an example. It can be understood that an IM group may include multiple accounts, and a set of accounts in the IM group may be obtained, which may be an account nickname or an identity document (ID), to obtain communication data between the accounts in the set.

In step S102, a communication frequency between accounts in the set of accounts within a preset time period is obtained.

In detail, according to historical communication data between accounts in the set (only communication relationship data is used, without involving any specific communication content) obtained in step S101, the Spark (which is a distributed cluster computing framework) timing task is used to count the communication frequency between accounts within the preset time period, such as the number of days of communication and the number of times of communication. The preset time may be 90 days or 120 days, and the specific value is set according to business requirements, which is not limited in the disclosure. In an embodiment, the communication frequency between the accounts within the acquired preset time period can be stored, for example, in a database (such as redis), which is convenient for generating an account intimacy or calling the data in time when a caller obtains an intimacy between accounts.

In step S103, a communication network graph is generated based on the communication frequency.

In detail, the communication network graph is generated based on the communication frequency between the accounts obtained in step S102. For example, the account can be used as a node, the communication frequency between the accounts can be used as an edge weight, and the communication network graph is generated with networkx (graph theory), and the properties of the communication network graph are calculated, such as a shortest reachable path, a betweenness centrality value, and a shortest reachable distance between nodes. In this case, networkx is a software toolkit written in python language, which is convenient for the accounts to create, operate and learn complex networks. Therefore, networkx can be used to store networks in standardized and non-standardized data formats, generate a variety of random networks and classical networks, analyze network structures, build network models, design new network algorithms, draw networks, and so on.

In step S104, an embedding vector of each account output by a graph model is obtained, the graph model is trained based on the communication network graph.

In detail, Embedding is a way to convert discrete variables into continuous embedding vectors by mapping from discrete objects (such as words or phrase) to real vectors, which can be regarded as a high-dimensional vector. The dimensions in the vector generally have no fixed meaning, and positions of vectors and distances between the vectors are used in machine learning. In neural networks, Embedding can not only reduce spatial dimension of discrete variables, but also represent the variables meaningfully.

According to the communication network graph generated in step S103, the graph model is trained, to obtain the embedding vector of the account output by the graph model, thus obtaining the embedding vector of each account in the communication network graph. In this embodiment of the disclosure, the graph model may specifically include, but is not limited to, at least one of a Node2Vec graph model and a graph attention model.

In an embodiment, the embedding vector of the account output by the Node2Vec graph model and the embedding vector of the account output by the graph attention model can be linearly combined, to obtain the embedding vector of the account output by the graph model.

For the Node2Vec graph model, the communication network graph is input into the Node2Vec graph model, and a series of paths are generated on the communication network graph structure through random walk, and then stochastic gradient descent is performed in an unsupervised manner, so that the Node2Vec graph model outputs the embedding vector of each node (i.e. account).

For the graph attention model, the communication relationship between the accounts in the communication network graph is used as a training set to train the graph attention model. In the specific implementation, some existing edge relationships are extracted from the communication network graph, such as a communication relationship between account A and account B, as a verification set, so that the trained graph attention model can synthesize information of the node itself and information of its neighbor nodes to determine whether there is an edge between any two adjacent nodes. The trained graph attention model outputs the embedding vector of the accounts according to the communication relationship between the accounts in the communication network graph.

In step S105, an intimacy between the accounts is generated based on the embedding vector.

In detail, the intimacy between the accounts is generated based on the embedding vector of the accounts obtained in step S104.

In conclusion, according to the method for generating an account intimacy, the set of accounts in the IM group is obtained. The communication frequency between accounts in the set of accounts within the preset time period is obtained. The communication network graph is generated based on the communication frequency. The embedding vector of each account output by the graph model is obtained, in which the graph model is trained based on the communication network graph. The intimacy between the accounts is generated based on the embedding vector. The communication network graph constructed according to the communication frequency between accounts is used to train the graph model, the account intimacy model can be independently generated without binding with a downstream business. Meanwhile, the embodiment of the disclosure models the account intimacy relationship based on the graph neural network, which can effectively use the graph model to mine an association between the accounts, to capture local characteristics and the global characteristics in the communication network graph, and to improve the generation accuracy of intimacy between the accounts.

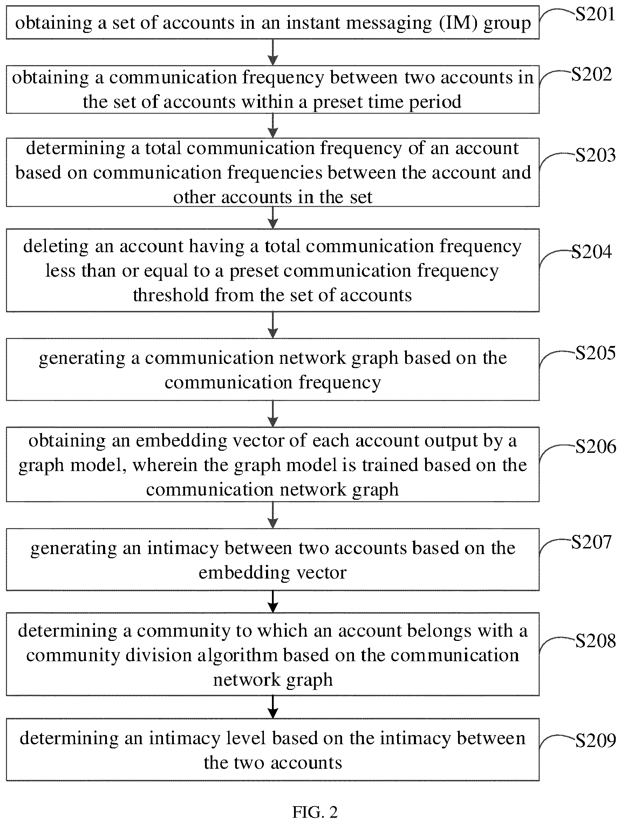

FIG. 2 is a flowchart of a method for generating an account intimacy according to Embodiment 2 of the disclosure.

As shown in FIG. 2, on the basis of the embodiment shown in FIG. 1, the method for generating an account intimacy according to the embodiment of the disclosure may specifically include the following steps.

In step S201, a set of accounts in an IM group is obtained.

In step S202, a communication frequency between accounts in the set of accounts within a preset time period is obtained.

In detail, steps S201-S202 in this embodiment are the same as steps S101-S102 in the foregoing embodiment, whose details are not repeated here.

In step S203, a total communication frequency of an account is determined based on communication frequencies between the accounts.

In detail, the total communication frequency of the account is calculated based on the communication frequency between the accounts obtained in step S202. For example, when the communication frequency is expressed by a number of communication days, and the number of communication days between account A and account B is 1, the number of communication days between account A and account C is 3, and the number of communication days between account A and account D is 4, that is, the total number of communication days of account A (i.e., the total communication frequency) is 1+ 3+4=8 days.

In step S204, an account having total communication frequency less than or equal to a preset communication frequency threshold is deleted from the set of accounts.

In detail, the account having the total communication frequency obtained in step S203 less than or equal to the preset communication frequency threshold is deleted from the set of accounts, and the accounts that meet the condition are reserved. In an embodiment, the communication frequency between the accounts that meet the condition is stored as training sample data, and the preset communication frequency threshold is set as required, which is not limited in the disclosure. For example, any account whose total communication frequency is less than or equal to 1 day within 90 days is deleted, and any account whose total communication frequency is greater than 1 day is reserved, thus avoiding involving the data generated by occasional communication between the accounts into the training sample data, reducing noise of the data, and enhancing generation accuracy of intimacy between accounts.

In step S205, a communication network graph is generated based on the communication frequency.

In step S206, an embedding vector of each account output by a graph model is obtained, the graph model is trained based on the communication network graph.

In step S207, an intimacy between the accounts is generated based on the embedding vector.

In detail, steps S205-S207 in this embodiment are the same as steps S103-S105 in the foregoing embodiment, and details are not described herein again.

Further, the method for generating an account intimacy according to the embodiment of the disclosure may further include the following steps at S208-S209.

In step S208, a community to which each account belongs is determined with a community division algorithm based on the communication network graph.

In detail, the communication network graph generated according to step S205 adopts the community division algorithm (e.g., Louvain algorithm) to perform unsupervised community division, to determine the community to which the account belongs. In a specific implementation, different communities are identified by community tags, and the community tags can be existing data information, such as a team to which the account belongs and hobbies, or data information that can be determined with the community division algorithm for the communication network graph built according to step S205. In the embodiment of the disclosure, based on the communication network diagram, the Louvain algorithm is used to divide the communities, and the community division result, that is, the community to which the account belongs is obtained, thereby determining the community to which each account belongs. In an embodiment, the determined community of each account may be stored, for example, in a database (such as redis), so that the caller can call the data in time when obtaining the intimacy between accounts.

In step S209, an intimacy level is determined based on the intimacy between the accounts.

In detail, the intimacy level between the accounts is determined based on the intimacy between the accounts generated in step S207. In an embodiment, in a specific implementation, the intimacy level between accounts may be determined according to an intimacy score corresponding to the intimacy between the accounts, and each intimacy level corresponds to a score range of the intimacy. The levels and score ranges are not limited in the disclosure. For example, for the normalized intimacy score, the intimacy levels can be divided as in Table 1 below.

**Table 1 Division of Intimacy Score and Intimacy Level**

| Intimacy Score | Intimacy Level |
|---|---|
| [1,0.8] | high |
| (0.8,0.6] | medium |
| (0.6,0] | low |

In an embodiment, the determined intimacy level between accounts may be stored, for example, in a database (e.g., redis), so that the caller can call the data in time when obtaining the intimacy between the accounts.

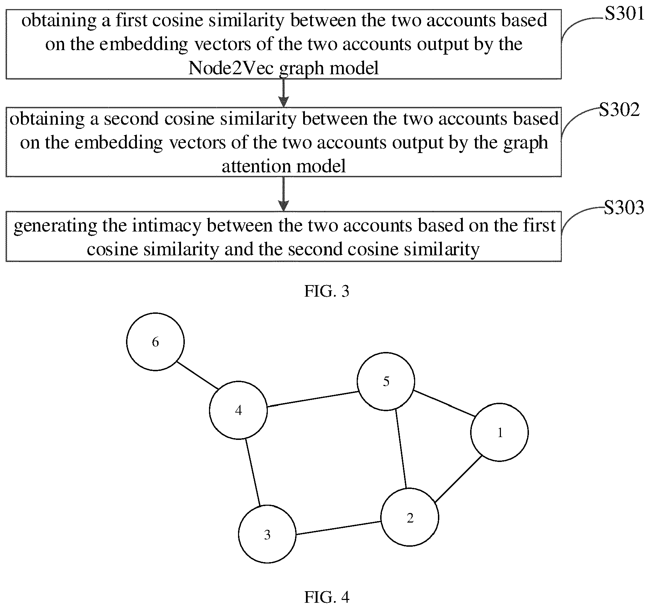

Further, as shown in FIG. 3, on the basis of the embodiment shown in FIG. 2, the graph model includes at least one of the Node2Vec graph model and the graph attention model. The process of "generating an intimacy between the accounts based on the embedding vector" in step S207 include the following steps.

In step S301, a first cosine similarity between the accounts is obtained based on the embedding vector output by the Node2Vec graph model.

In detail, for a combination of two or more accounts, the first cosine similarity between the accounts (that is, the cosine value of the embeddings of the two accounts) is calculated according to the embedding vector of the account output by the Node2Vec graph model. It should be noted here that the first cosine similarity between the accounts can reflect the intimacy between the accounts. The larger the value of the first cosine similarity, the closer the embedding s of a pair of accounts, that is, the higher the intimacy between the accounts.

In step S302, a second cosine similarity between the accounts is obtained based on the embedding vector output by the graph attention model.

In detail, for a combination of two or more accounts, the second cosine similarity between the accounts is calculated according to the embedding vector of the account output by the graph attention model. The calculation method and function of the second cosine similarity are the same as those of the first cosine similarity, which will not be repeated here.

In step S303, the intimacy between the accounts is generated based on the first cosine similarity and the second cosine similarity.

In detail, the intimacy between the accounts is generated based on the first cosine similarity calculated in step S301 and the second cosine similarity calculated in S302. In the embodiment of the disclosure, the intimacy between the accounts may be obtained by linearly calculating the first cosine similarity and the second cosine similarity. For example, the first cosine similarity is a, the second cosine similarity is b, and the nonlinear transformation function (Sigmoid) is used as a weight adjustment module, namely sigmoid(c ^{∗} a + d ^{∗} b), to generate the intimacy between the accounts, The parameters c and d may be set according to prior experience, for example, c=d=0.5 in the embodiment of the disclosure, and the specific values are not limited in the disclosure.

Further, on the basis of the above embodiments, "generating an intimacy between the accounts based on the embedding vector" in the above step S207 may specifically include: generating the intimacy between the accounts based on the embedding vector of the account and the statistical characteristics of the account.

In detail, the embedding vector of the account and the statistical characteristics of the account are integrated through the weight adjustment module to generate the intimacy between the accounts.

The statistical characteristics comprises one or more of: the communication frequency, a shortest reachable distance, a shortest reachable path, a betweenness centrality value, and a time difference between the last communication time and current time.

It should be noted here that the shortest reachable distance N is the reachable distance between two nodes in the communication network graph through at least N intermediate nodes. The shortest reachable path is the shortest path that communicates the nodes in the network graph. It is not difficult to understand that the above shortest reachable path corresponds to a node sequence. The betweenness centrality value is a node is located in the shortest paths of how many pairs of nodes in the whole graph. In the specific implementation, statistical characteristics such as the shortest reachable path, the shortest reachable distance, and the betweenness centrality value can be obtained from the communication network graph through the networkx toolkit. In the communication network diagram shown in FIG. 4, the shortest reachable distance between node "1" and node "4" is 2, and the shortest reachable path can be 1-5-4. The time difference between the last communication time and the current time can be determined according to the historical communication data of the account. In an embodiment, the determined statistical characteristics of each account may be stored, for example, in a database (for example, redis), so that the caller can call the data in time when obtaining the intimacy of the account.

Those skilled in the art can understand that when the caller needs to obtain the intimacy of an account, it can obtain the stored intimacy, intimacy level, statistical characteristics, and community of the account from the database, and return them to the caller.

In conclusion, according to the method for generating an account intimacy, the set of accounts in the IM group is obtained. The communication frequency between accounts in the set of accounts within the preset time period is obtained. The communication network graph is built based on the communication frequency. The embedding vector of each account output by the graph model is obtained, in which the graph model is trained based on the communication network graph. The intimacy between the accounts is generated based on the embedding vector. The communication network graph constructed according to the communication frequency between accounts is used to train the graph model, the account intimacy model can be independently generated without binding with a downstream business. Meanwhile, the embodiment of the disclosure models the account intimacy relationship based on the graph neural network, which can effectively use the graph model to mine the association between the accounts, to capture the local characteristics and the global characteristics in the communication network graph, and improve the generation accuracy of intimacy between the accounts. According to the communication network graph, the community to which the account belongs can be determined with the community division algorithm, and the social network analysis result of the account can be determined, which further improves the generation accuracy of the intimacy of the account.

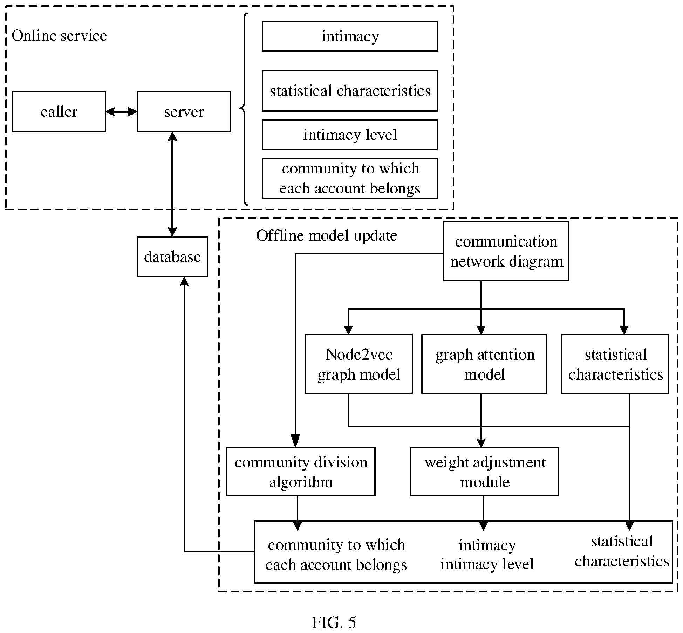

In order to clearly illustrate the method for generating an account intimacy according to the embodiment of the disclosure, a detailed description is given below with reference to FIG. 5.

FIG. 5 is a schematic diagram of a scenario of a method for generating an account intimacy according to an embodiment of the disclosure. As shown in FIG. 5, the method for generating an account intimacy according to the embodiment of the disclosure is divided into two stages: online service and offline model update. In the online service stage, when an account initiates a request for obtaining an intimacy, the server directly retrieves data related to the intimacy of account from the database, such as the intimacy between accounts related to the account, the intimacy level between accounts, the community to which the account belongs and statistical characteristics of the account, which are generated in the offline model update stage, returns the related data to the caller. In the offline model update stage, the communication frequency between the accounts is adopted to construct the communication network graph, and calculate the statistical characteristics corresponding to the communication network graph, and train the Node2Vec graph model and the graph attention model according to the communication network graph, to obtain the embedding vectors output by the two models respectively. The embedding vectors and statistical characteristics output by the two models are input into the weight adjustment module to generate the intimacy between the accounts. The intimacy level between the accounts is determined based on the intimacy between the accounts, and the community division algorithm is adopted to determine the community to which the account belongs, and the data related to the intimacy of account, such as the intimacy between the accounts, the intimacy level between the accounts, the community to which the account belongs, and the statistical characteristics of the account, are stored in the database.

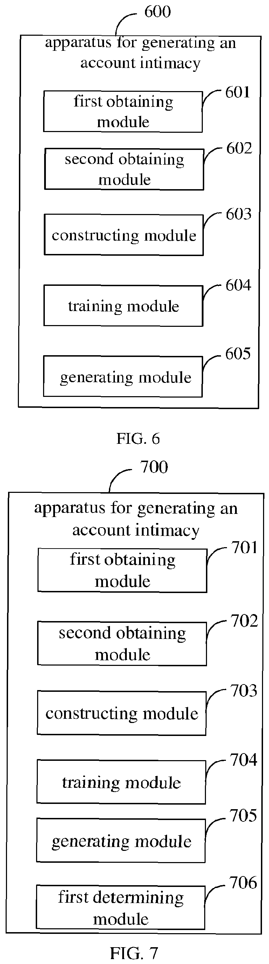

FIG. 6 is a block diagram of an apparatus for generating an account intimacy according to Embodiment 1 of the disclosure.

As shown in FIG. 6, an apparatus 600 for generating an account intimacy according to an embodiment of the disclosure includes: a first obtaining module 601, a second obtaining module 602, a constructing module 603, a training module 604 and a generating module 605.

The first obtaining module 601 is configured to obtain a set of accounts in an instant messaging (IM) group.

The second obtaining module 602 is configured to obtain a communication frequency between accounts in the set of accounts within a preset time period.

The constructing module 603 is configured to generate a communication network graph based on the communication frequency.

The training module 604 is configured to obtain an embedding vector of each account output by a graph model, the graph model is trained based on the communication network graph.

The generating module 605 is configured to generate an intimacy between the accounts based on the embedding vector.

It should be noted that the above explanation on the embodiments of the method for generating an account intimacy is also applicable to the apparatus for generating an account intimacy according to the embodiments of the disclosure, and the specific process will not be repeated here.

In conclusion, with the apparatus for generating an account intimacy according to the embodiment of the disclosure, the set of accounts in the IM group is obtained. The communication frequency between accounts in the set of accounts within the preset time period is obtained. The communication network graph is built based on the communication frequency. The embedding vector of each account output by the graph model is obtained, in which the graph model is trained based on the communication network graph. The intimacy between the accounts is generated based on the embedding vector. The communication network graph constructed according to the communication frequency between accounts is used to train the graph model, the account intimacy model can be independently generated without binding with a downstream business. Meanwhile, the embodiment of the disclosure models the account intimacy relationship based on the graph neural network, which can effectively use the graph model to mine the association between the accounts, to capture the local characteristics and the global characteristics in the communication network graph, and to improve the generation accuracy of intimacy between the accounts.

FIG. 7 is a block diagram of an apparatus for generating an account intimacy according to Embodiment 2 of the disclosure.

As shown in FIG. 7, an apparatus 700 for generating an account intimacy according to an embodiment of the disclosure includes: a second obtaining module 701, a second obtaining module 702, a constructing module 703, a training module 704 and a generating module 705.

The first obtaining module 701 has the same structure and function as the first obtaining module 601 in the above embodiments. The second obtaining module 702 has the same structure and function as the second obtaining module 602 in the previous embodiments. The constructing module 703 has the same structure and function as the constructing module 603 in the previous embodiments. The training module 704 has the same structure and function as the training module 604 in the previous embodiments. The generating module 705 has the same structure and function as the generating module 605 in the previous embodiments.

The apparatus 700 for generating an account intimacy according to an embodiment of the disclosure further includes: a counting module and a deleting module.

The counting module is configured to determine a total communication frequency of an account based on communication frequencies between the accounts.

The deleting module is configured to delete an account having a total communication frequency less than or equal to a preset communication frequency threshold from the set of accounts.

The graph model includes at least one of a Node2Vec graph model and a graph attention model, and the generating module 705 includes: a first counting unit, a second counting unit and a first generating unit.

The first counting unit is configured to obtain a first cosine similarity between the accounts based on the embedding vector output by the Node2Vec graph model.

The second counting unit is configured to obtain a second cosine similarity between the accounts based on the embedding vector output by the graph attention model.

The first generating unit is configured to generate the intimacy between the accounts based on the first cosine similarity and the second cosine similarity.

The generating module 705 further includes: a second generating unit, configured to generate the intimacy between the accounts based on the embedding vector and statistical characteristics of accounts.

The statistical characteristics includes one or more of: the communication frequency, a shortest reachable distance, a shortest reachable path, a betweenness centrality value, and a time difference between the last communication time and current time.

The apparatus 700 for generating an account intimacy according to an embodiment of the disclosure further includes: a first determining module 706, configured to determine a community to which each account belongs with a community division algorithm based on the communication network graph.

The apparatus 700 for generating an account intimacy according to an embodiment of the disclosure further includes: a second determining module, configured to determine an intimacy level based on the intimacy between the accounts.

In conclusion, with the apparatus for generating an account intimacy according to the embodiment of the disclosure, the set of accounts in the IM group is obtained. The communication frequency between accounts in the set of accounts within the preset time period is obtained. The communication network graph is built based on the communication frequency. The embedding vector of each account output by the graph model is obtained, in which the graph model is trained based on the communication network graph. The intimacy between the accounts is generated based on the embedding vector. The communication network graph constructed according to the communication frequency between accounts is used to train the graph model, the account intimacy model can be independently generated without binding with a downstream business. Meanwhile, the embodiment of the disclosure models the account intimacy relationship based on the graph neural network, which can effectively use the graph model to mine the association between the accounts, to capture the local characteristics and the global characteristics in the communication network graph, and to improve the generation accuracy of intimacy between the accounts. According to the communication network graph, the community to which the account belongs can be determined with the community division algorithm, and the social network analysis result of the account can be determined, which further improves the generation accuracy of the intimacy between the accounts.

In the technical solution of the disclosure, acquisition, storage and application of the account personal information involved are in compliance with the relevant laws and regulations, and do not violate public order and good customs.

According to embodiments of the disclosure, the disclosure also provides an electronic device, a readable storage medium and a computer program product.

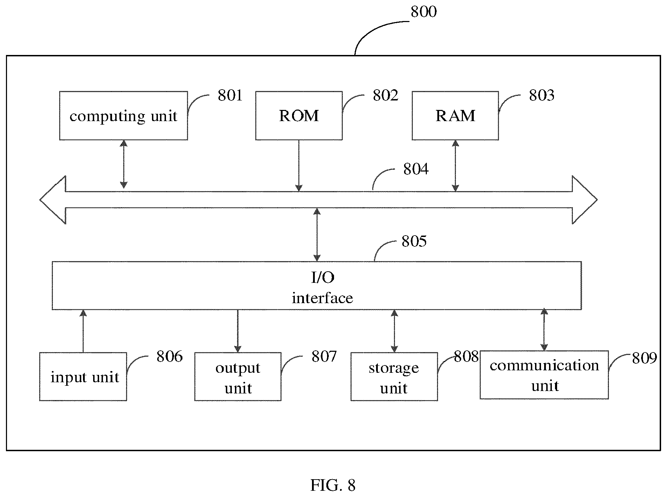

FIG. 8 is a block diagram of an electronic device 800 according to embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 8, the device 800 includes a computing unit 801 performing various appropriate actions and processes based on computer programs stored in a read-only memory (ROM) 802 or computer programs loaded from the storage unit 808 to a random access memory (RAM) 803. In the RAM 803, various programs and data required for the operation of the device 800 are stored. The computing unit 801, the ROM 802, and the RAM 803 are connected to each other through a bus 804. An input/output (I/O) interface 805 is also connected to the bus 804.

Components in the device 800 are connected to the I/O interface 805, including: an inputting unit 806, such as a keyboard, a mouse; an outputting unit 807, such as various types of displays, speakers; a storage unit 808, such as a disk, an optical disk; and a communication unit 809, such as network cards, modems, wireless communication transceivers, and the like. The communication unit 809 allows the device 800 to exchange information/data with other devices through a computer network such as the Internet and/or various telecommunication networks.

The computing unit 801 may be various general-purpose and/or dedicated processing components with processing and computing capabilities. Some examples of computing unit 801 include, but are not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 801 executes the various methods and processes described above, such as the method for generating an account intimacy. For example, in some embodiments, the method may be implemented as a computer software program, which is tangibly contained in a machine-readable medium, such as the storage unit 808. In some embodiments, part or all of the computer program may be loaded and/or installed on the device 800 via the ROM 802 and/or the communication unit 809. When the computer program is loaded on the RAM 803 and executed by the computing unit 801, one or more steps of the method described above may be executed. Alternatively, in other embodiments, the computing unit 801 may be configured to perform the method for generating an account intimacy in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and Block-chain network.

The computer system may include a client and a server. The client and server are generally remote from each other and interacting through a communication network. The client-server relation is generated by computer programs running on the respective computers and having a client-server relation with each other. The server may be a cloud server, a distributed system server, or a server combined with block-chain.

According to an embodiment of the disclosure, the disclosure also provides a computer program product including computer programs. When the computer programs are executed by a processor, the method for generating an account intimacy according to the foregoing embodiments of the disclosure is implemented.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein. The above specific embodiments do not constitute a limitation on the protection scope of the disclosure.

## Claims

1. A method for generating an account intimacy, performed by a terminal, comprising:
obtaining (S101, S201) a set of accounts in an instant messaging (IM) group;
obtaining (S102, S202) a communication frequency between two accounts in the set of accounts within a preset time period;
generating (S103, S205) a communication network graph based on the communication frequency;
obtaining (S104, S206) an embedding vector of each account output by a graph model, wherein the graph model is trained based on the communication network graph; and
generating (S105, S207) an intimacy between two accounts based on the embedding vectors of the two accounts.

2. The method according to claim 1, before generating the communication network graph, the method comprising:
determining (S203) a total communication frequency of an account based on communication frequencies between the account and other accounts in the set; and
deleting (S204) an account having a total communication frequency less than or equal to a preset communication frequency threshold from the set of accounts.

3. The method according to claim 1, wherein the graph model comprises at least one of a Node2Vec graph model and a graph attention model, and generating the intimacy between the two accounts based on the embedding vector, comprises:
obtaining (S301) a first cosine similarity between the two accounts based on the embedding vectors of the two accounts output by the Node2Vec graph model;
obtaining (S302) a second cosine similarity between the two accounts based on the embedding vectors of the two accounts output by the graph attention model; and
generating (S303) the intimacy between the two accounts based on the first cosine similarity and the second cosine similarity.

4. The method according to claim 1, wherein generating the intimacy between the accounts based on the embedding vector, comprises:
generating the intimacy between the two accounts based on the embedding vectors and statistical characteristics of the two accounts.

5. The method according to claim 4, wherein the statistical characteristics comprises one or more of:
the communication frequency, a shortest reachable distance, a shortest reachable path, a betweenness centrality value, and a time difference between the last communication time and current time.

6. The method according to claim 1, further comprising:
determining (S208) a community to which an account belongs with a community division algorithm based on the communication network graph.

7. The method according to claim 1, further comprising:
determining (S209) an intimacy level based on the intimacy between the two accounts.

8. An apparatus for generating an account intimacy, comprising:
a first obtaining module (601, 701), configured to obtain a set of accounts in an instant messaging (IM) group;
a second obtaining module (602, 702), configured to obtain a communication frequency between two accounts in the set of accounts within a preset time period;
a constructing module (603, 703), configured to generate a communication network graph based on the communication frequency;
a training module (604, 704), configured to train a graph model based on the communication network graph and obtain an embedding vector of each account output by the graph model; and
a generating module (605, 705), configured to generate an intimacy between two accounts based on the embedding vectors of the two accounts.

9. The apparatus according to claim 8, further comprising:
a counting module, configured to determine a total communication frequency of an account based on communication frequencies between the account and other accounts in the set; and
a deleting module, configured to delete an account having a total communication frequency less than or equal to a preset communication frequency threshold from the set of accounts.

10. The apparatus according to claim 8, wherein the graph model comprises at least one of a Node2Vec graph model and a graph attention model, and the generating module comprises:
a first counting unit, configured to obtain a first cosine similarity between the two accounts based on the embedding vector s of the two accounts output by the Node2Vec graph model;
a second counting unit, configured to obtain a second cosine similarity between the two accounts based on the embedding vectors of the two accounts output by the graph attention model; and
a first generating unit, configured to generate the intimacy between the two accounts based on the first cosine similarity and the second cosine similarity.

11. The apparatus according to claim 8, wherein the generating module comprises:
a second generating unit, configured to generate the intimacy between the two accounts based on the embedding vector and statistical characteristics of the two accounts.

12. The apparatus according to claim 11, wherein the statistical characteristics comprises one or more of:
the communication frequency, a shortest reachable distance, a shortest reachable path, a betweenness centrality value, and a time difference between the last communication time and current time.

13. The apparatus according to claim 8, further comprising:
a first determining module (706), configured to determine a community to which each account belongs based on the communication network graph and a community division algorithm.

14. The apparatus according to claim 8, further comprising:
a second determining module, configured to determine an intimacy level based on the intimacy between the two accounts.

15. A non-transitory computer-readable storage medium storing computer instructions, wherein the computer instructions are configured to cause a computer to execute the method for generating an account intimacy according to any of claims 1-7.
